Europäisches Patentamt

European Patent Office

Office européen des brevets

(11) Veröffentlichungsnummer: **0 082 248**
**A1**

(12) # EUROPÄISCHE PATENTANMELDUNG

(21) Anmeldenummer: 82107671.8

(22) Anmeldetag: 21.08.82

(51) Int. Cl.³: **F 16 J 15/14**
F 16 L 23/00, B 64 C 1/00

(30) Priorität: 22.12.81 DE 3150716

(43) Veröffentlichungstag der Anmeldung:
29.06.83 Patentblatt 83/26

(84) Benannte Vertragsstaaten:
FR GB IT NL

(71) Anmelder: Vereinigte Flugtechnische Werke GmbH
Hünefeldstrasse 1-5
D-2800 Bremen(DE)

(72) Erfinder: Lehmann, Ulf
Am Herzogenkamp 6B
D-2800 Bremen 34(DE)

(74) Vertreter: Bischof, Hans-Jochen
Schwalbenstrasse 10 Postfach 2105
D-2808 Syke-Barrien(DE)

(54) **Vorrichtung zum Einspritzen eines plastischen Dichtmittels.**

(57) Die Erfindung bezieht sich auf eine Vorrichtung zum Einspritzen eines plastischen Dichtmittels in eine zwischen zwei Bauteilen vorgesehene Nut. Die Vorrichtung besteht dabei aus einer schraubenförmigen Spritzdüse, welche in eine für ein Verbindungselement der Bauteile vorgesehene die Nut durchdringende Bohrung gesteckt und mit einer Mutter verschraubt ist. Durch eine vom Schraubenkopf ausgehende axiale bis zur Nut reichende Bohrung und eine Querbohrung in Nuthöhe wird das Dichtmittel in die Nut eingespritzt.

- / -

Vorrichtung zum Einspritzen eines plastischen Dichtmittels

Die Erfindung bezieht sich auf eine Vorrichtung zum Einspritzen eines plastischen Dichtmittels durch eine Bohrung eines Bauteils in eine zwischen zwei Bauteilen vorgesehene Nut.

Zum Abdichten von Bauteilen werden seit einiger Zeit Nutdichtungen benutzt. Bei solchen Nutdichtungen wird ein nichtaushärtendes Dichtmittel in eine Nut eingespritzt, welche in der Paßfläche eines von zwei zu verbindenden Bauteilen vorgesehen ist. Eine solche Dichtungsart ist auch für relativ dünnwandige Bauteile z. B. für Beplankungen im Luftfahrzeugsektor geeignet und kann allein oder gegebenenfalls in redundanter Form benutzt werden.

Beim Abdichten von Bauteilen der zuvor beschriebenen Art, bereitet das Einbringen des Dichtmittels in die Nut die größten Schwierigkeiten. Das Einspritzen wird unter Hochdruck vorgenommen, wobei wegen der Gefahr des Ausfließens im Einsatz das Dichtmittel nicht beliebig dünnflüssig gemacht werden kann. Es sind daher mehrere Einspritzbohrungen abhängig von der Länge einer Nutdichtung erforderlich. Diese Tatsache ist aber unbefriedigend, da zusätzlich Bohrungen insbesondere bei dünneren Bauteilen eine Schwächung bedeuten deren Zahl durch eine Erhöhung des Einspritzdruckes nicht verringert werden kann. Eins Druckerhöhung führt zu einer Verformung der Bauteile mit der Folge, daß das Dichtmittel aus der Nut entweicht und sich zwischen die Paßflächen der zu verbindenden Bauteile schiebt.

Der Erfindung liegt daher die Aufgabe zugrunde eine Vorrichtung zum Einspritzen eines plastischen Dichtmittels in eine zwischen zwei Bauteile vorgesehene Nut vorzusehen, welche in der Lage ist große Spritzlängen zu gewährleisten ohne die Bauteile zu verformen. Gemäß der Erfindung ist diese Aufgabe dadurch gelöst, daß die Vorrichtung als schraubenförmige Spritzdüse ausgebildet ist und in eine für ein Verbindungselement der Bauteile vorgesehene die Nut durchdringende Bohrung einsteckbar und durch eine Mutter befestigbar ist, und daß die Spritzdüse eine vom Schraubenkopf ausgehende bis zur Nut reichende axiale Bohrung mit einer Querbohrung in Nuthöhe zum Einspritzen des Dichtmittels in die Nut aufweist.

Die erfindungsgemäße Spritzdüse wird dabei durch eine Bohrung gesteckt, welche für die üblichen Verbindungselemente wie Schrauben usw. vorgesehen ist und mit einer Mutter verschraubt. Zusätzliche Einspritzbohrungen sind daher nicht erforderlich. Beim Einspritzen des Dichtmittels können sich die Bauteile an dieser Stelle nicht auseinanderbewegen, da die Spritzdüse die Bauteile zusammenhält. Der größte Einspritzdruck, der üblicherweise an der Einspritzstelle auftritt, wird damit durch den Anpreßdruck der verschraubten Spritzdüse aufgefangen. Eine Erhöhung des Einspritzdruckes bringt daher hier keine Verformung der Bauteile sondern größere Einspritzlängen, was durch praktische Versuche bestätigt wurde. Die größere Auflagefläche des Schraubenkopfes der Spritzdüse wirkt sich dabei vorteilhaft auf das Verhältnis Einspritzdruck - Anpreßdruck aus. Beim Einspritzen des Dichtmittels kann sich der Druck aufgrund der Querbohrung nur in Nutrichtung fortpflanzen, wodurch Druckspritzen vermieden werden. Vorteilhaft ist auch, daß durch das Fehlen zusätzlicher Einspritzbohrungen eine Schwächung in der Struktur der Bauteile vermieden wird. Der Schraubenkopf der Spritzdüse kann dabei eine Dichtscheibe zum Abdichten eines Anschlußelementes und eine der Querbohrung zugeordnete Markierung aufweisen, welche eine Richtungsanzeige für die Querbohrung in Bezug auf die Nut bedeutet.

- 7 -

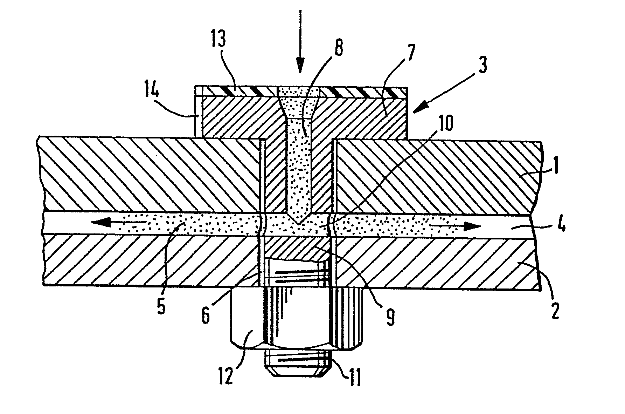

Die Erfindung wird anhand der beiliegenden Zeichnung näher erläutert. Die beiliegende Zeichnung zeigt in vergrößerter Form zwei dünne Bauteile 1, 2, die durch eine schraubenförmige Spritzdüse 3 zusammengehalten werden. Bei den Bauteilen 1, 2 handelt es sich um im Flugzeugbau eingesetzte Beplankungen, welche in Wirklichkeit relativ dünnwandig sind. Das untere Bauteil 2, besitzt eine mit Dichtmittel 5 zu füllende Nut 4 und außerdem sind beide Bauteile 1, 2 mit einer die Nut 4 durchdringenden Bohrung 6 versehen. Diese Bohrung 6 ist zur Aufnahme üblicher Verbindungselemente wie Schrauben, Bolzen, Niete usw. vorgesehen und wird hier zusätzlich zum Einspritzen des Dichtmittels 5 benutzt. Die in die Bohrung 6 eingesteckte Spritzdüse 3 ist wie bereits erwähnt, schraubenförmig ausgebildet und besitzt einen relativ großen Schraubenkopf 7. In der Spritzdüse 3 ist eine vom Schraubenkopf 7 ausgehende axiale Bohrung 8 vorgesehen, welche bis zur Nut 4 reicht. Außerdem ist der Bolzen 9 der Spritzdüse 3 mit einer Querbohrung 10 in Höhe der Nut 4 und am Ende mit Gewinde 11 zum Verschrauben mit einer Mutter 12 versehen. Der Schraubenkopf 7 trägt darüberhinaus eine Dichtscheibe 13 zum Abdichten eines Anschlußelementes und eine der Querbohrung 10 zugeordnete Markierung 14, zur Anzeige der Querbohrungsrichtung in Bezug auf die Nut 4.

Wie Versuche bestätigt haben läßt sich mit der erfindungsgemäßen Spritzdüse das Dichtmittel sehr gut in die Nut 4 einbringen. Da die Spritzdüse 3 die Bauteile an der Einspritzstelle zusammerpreßt ist es möglich einen erheblich höheren Spritzdruck als bisher zu benutzen. Der Druck wirkt sich dabei im wesentlichen in Nutrichtung aus, so daß mit der Druckerhöhung von der Einspritzstelle aus gesehen auch erheblich größere Spritzlängen erzielbar sind. Das bedeutet, daß zusätzliche Bohrungen zum Einspritzen des Dichtmittels nicht erforderlich sind, da die für die üblichen Verbindungselemente vorgesehenen Bohrungen hierfür ausreichen. Eine Schwächung der Struktur durch zusätzliche Einspritzlöcher wird daher vermieden. Die erfindungsgemäße Spritzdüse ermöglicht es daher auch Nachdichtungen vorzunehmen, da sie durch Entfernung der Verbindungselemente in jede dafür vorgesehene Bohrung eingeschraubt werden kann. Die

große Auflagefläche des Schraubenkopfes 7 ergibt im Einsatz auch einen flächenmäßig besser verteilten Anpreßdruck der sich vorteilhaft auf das Verhältnis Einspritzdruck - Anpreßdruck auswirkt. Nach dem Einspritzen des Dichtmittels wird die Spritzdüse ausgeschraubt und in die Bohrung 6 ein übliches Verbindungselement eingesetzt.

0082248

1 Bauteil

2 Bauteil

3 Spritzd se

4 Nut

5 Dichtmittel

6 Bohrung

7 Schraubenkopf

8 Bohrung ( axial )

9 Bolzen

10 Querbohrung

11 Gewinde

12 Mutter

13 Dichtscheibe

14 Markierung

0082248

8123 - 62                                    Bremen, den 10.12.1981
                                             Vv 23 / Sm / He

Vereinigte Flugtechnische Werke GmbH

Vorrichtung zum Einspritzen eines plastischen Dichtmittels

## Patentansprüche

1.            Vorrichtung zum Einspritzen eines plastischen Dichtmittels durch eine Bohrung eines Bauteils in eine zwischen zwei Bauteilen vorgesehene Nut, dadurch g e k e n n z e i c h n e t, daß die
Vorrichtung als schraubenförmige Spritzdüse ( 3 ) ausgebildet ist und
in eine für ein Verbindungselement der Bauteile ( 1, 2 ) vorgesehene
die Nut ( 4 ) durchdringende Bohrung ( 6 ) einsteckbar und durch eine
Mutter ( 12 ) befestigbar ist, und daß die Spritzdüse ( 3 ) eine vom
Schraubenkopf ( 7 ) ausgehende bis zur Nut ( 4 ) reichende axiale Bohrung ( 8 ) mit einer Querbohrung ( 10 ) in Nuthöhe zum Einspritzen des
Dichtmittels ( 5 ) in die Nut ( 4 ) aufweist.

2.        Vorrichtung nach Anspruch 1, dadurch g e k e n n - z e i c h n e t, daß der Schraubenkopf ( 7 ) der Spritzdüse ( 3 ) eine Dichtscheibe ( 13 ) zum Abdichten eines Anschlußelements und eine der Querbohrung ( 10 ) zugeordnete Markierung ( 14 ) aufweist, zur Richtungsanzeige der Querbohrung ( 10 ) in Bezug auf die Nut ( 4 ).

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 188 708 (MORISON) <br> * Seite 3, Zeilen 21-35; Figuren 3-5 * | 1 | F 16 J 15/14 <br> F 16 L 23/00 <br> B 64 C 1/00 |
| | --- | | |
| X | DE-C- 528 622 (FURMAN) <br> * Seite 2, Zeilen 48-121; Figuren 1-7 * | 1 | |
| | ----- | | |

RECHERCHIERTE SACHGEBIETE (Int. Cl. ³)

F 16 J
F 16 L
B 64 C

Der vorliegende Recherchenbericht wurde für alle Patentansprüche erstellt.

| Recherchenort <br> DEN HAAG | Abschlußdatum der Recherche <br> 30-03-1983 | Prüfer <br> LEGER M.G.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82